# EUROPÄISCHE PATENTSCHRIFT

(11) **EP 0 657 990 B1**
(45) Veröffentlichungstag und Bekanntmachung des Hinweises auf die Patenterteilung: **22.04.1998**
(21) Anmeldenummer: 94117581.2
(22) Anmeldetag: 08.11.1994
(51) Int. Cl.: H02P 8/40

(54) **Vorrichtung zum Betreiben von Schrittmotoren**
Stepper motors driving device
Dispositif de commande de moteurs pas-à-pas

(30) Priorität: 01.12.1993 DE 4340823; 18.05.1994 DE 4417369
(43) Veröffentlichungstag der Anmeldung: 14.06.1995
(73) Patentinhaber: GKR Gesellschaft für Fahrzeugklimaregelung mbH, D-71701 Schwieberdingen (DE)
(72) Erfinder: Breitling, Wolfram, Dipl.-Ing., D-74343 Sachsenheim (DE); Brenner, Veit-Michael, Dipl.-Ing., D-75428 Illingen (DE); Seyfang, Bernd, Dipl.-Ing. (FH), D-74379 Ingersheim (DE)

(56) Entgegenhaltungen:
- EP-A- 0 501 902
- US-A- 4 742 287
- GLOBAL DESIGN NEWS, Oktober 1993 Seiten 104 - 105 CHARLES J. MURRAY 'Smart Chip Simplifies Motor Wiring'

## Beschreibung

### Stand der Technik

Die Erfindung geht aus von einer Vorrichtung zum Betreiben von Schrittmotoren nach der Gattung des unabhängigen Anspruchs. Aus der Zeitschrift GLOBAL DESIGN NEWS, Sept. - Okt. 1993, S. 104 - 105 ist eine gattungsgemäße Vorrichtung bekannt, bei der bis zu acht Schrittmotoren über lediglich drei Leitungen von einem zentralen Steuergerät angesteuert werden können. Die drei Leitungen sind eine Stromversorgungsleitung, eine Datenleitung sowie eine Leitung zum Schließen der Stromkreise. Die für die Schrittmotoren erforderlichen Informationen werden über die Datenleitung in Multiplextechnik übertragen. Jedem Schrittmotor ist eine einen Mikroprozessor enthaltende signalverarbeitende Anordnung zugeordnet, welche die auf der Datenleitung zur Verfügung gestellte Information einliest und verarbeitet. Nachdem eine Übereinstimmung bei der Adresse festgestellt wurde, werden die weiteren Daten ausgewertet, die Angaben über das Einschalten der einzelnen Wicklungen des Schrittmotors umfassen. Der Vorteil der vorbekannten Vorrichtung liegt in dem geringen Aufwand für die erforderliche Verdrahtung.

Als Stand der Technik ist in dem genannten Zeitschriftenbeitrag eine Vorrichtung zum Betreiben von Schrittmotoren angegeben, bei der jeder Schrittmotor einzeln mit dem zentralen Steuergerät verkabelt ist. Zu jedem Schrittmotor führen zwei Stromversorgungsleitungen sowie vier Steuerleitungen zum separaten Einschalten von Wicklungen des Schrittmotors.

Aus der US-PS 4,742,287 ist eine Motorsteuerungsanordnung für Schrittmotoren bekannt, die gemeinsame Stromversorgungsleitungen für Schrittmotorenwicklungen aufweist und unipolar ausgeführt ist. Zwei Transistoren gewährleisten eine gezielte Auswahl der gewünschten Stromversorgungsleitung(en). Jeweils zwei Wicklungen unterschiedlicher Schrittmotoren lassen sich zugleich von weiteren Steuertransistoren im Sinne der gewünschten Steuersignale ansteuern.

Der Erfindung liegt die Aufgabe zugrunde, eine preisgünstige Vorrichtung zum Betreiben von Schrittmotoren anzugeben.

Die Aufgabe wird durch die in dem unabhängigen Anspruch angegebenen Merkmale jeweils gelöst.

### Vorteile der Erfindung

Die Ausführung der erfindungsgemäßen Vorrichtung zum Betreiben von Schrittmotoren ist abgestellt auf Schrittmotoren, die getrennte Stromversorgungsleitungen für die Wicklungen aufweisen. Mit einer solchen Verschaltung ist eine bipolare Ansteuerung der Schrittmotoren möglich. Ein Schrittmotor mit zwei Wicklungen enthält demnach entsprechend zwei Stromversorgungsleitungen. Die Stromversorgungsleitungen sind jeweils zu einem Steuergerät geführt, das erste Umschaltmittel zur gezielten Vorgabe eines Potentials mit vorgegebener Polarität auf jeder Stromversorgungsleitung aufweist. Das Steuergerät enthält zweite Umschaltmittel zum Bereitstellen von vorgegebenen Steuersignalen, die an eine vorgegebene Anzahl von Steuerleitungen abgegeben werden, deren Anzahl der Anzahl der Wicklungen im Schrittmotor entspricht. An den Steuerleitungen sind die einzelnen Wicklungen der Schrittmotoren angeschlossen. Während die ersten Umschaltmittel gezielt wenigstens einen Schrittmotor oder mehrere, an den gleichen Stromversorgungsleitungen angeschlossene Schrittmotoren auswählen, legen die zweiten Umschaltmittel die für die einzelnen Wicklungen im Schrittmotor erforderlichen Steuersignale fest. Die zweiten Umschaltmittel geben auf den Steuerleitungen Potentiale mit jeweils vorgegebener Polarität vor.

Ein erster Vorteil der erfindungsgemäßen Vorrichtungen zum Betreiben von Schrittmotoren liegt darin, daß gegenüber einer separaten Verkabelung jedes Schrittmotors mit dem Steuergerät ein reduzierter Verkabelungsaufwand erforderlich ist. Ein weiterer Vorteil der erfindungsgemäßen Vorrichtungen zum Betreiben von Schrittmotoren liegt darin, daß der elektronische Aufwand reduziert ist, weil signalverarbeitende Anordnungen in den einzelnen Schrittmotoren nicht erforderlich sind.

Vorteilhafte Weiterbildungen und Ausgestaltungen der erfindungsgemäßen Vorrichtungen ergeben sich aus abhängigen Ansprüchen.

Für die bipolare Ansteuerung besonders geeignet sind Schrittmotoren, die lediglich zwei Wicklungen aufweisen. Diese einfachste Ausführung des Schrittmotors ermöglicht eine kostengünstige Realisierung der Motoren. Gegenüber der Ansteuerung von unipolaren Schrittmotoren ist der elektronische Aufwand im Steuergerät geringfügig dadurch erhöht, daß anstelle von einfachen Ein-Ausschaltern, wobei jeweils ein Ein-Ausschalter für einen Schrittmotor benötigt wird, Umschalter einzusetzen sind, wobei für jede Stromversorgungsleitung des einzelnen Schrittmotors ein separater Umschalter erforderlich ist.

Eine vorteilhafte Ausgestaltung, die bereits erwähnt wurde, sieht vor, daß an einer Stromversorgungsleitung mehrere Schrittmotoren angeschlossen sind. Die ersten Schaltmittel oder Umschaltmittel im Steuergerät wählen mit der einen Stromversorgungsleitung mehrere Schrittmotoren aus, die gleichzeitig über die Steuerleitungen angesteuert werden.

Eine vorteilhafte Weiterbildung sieht vor, daß mehrere zweite Schaltmittel oder Umschaltmittel vorgesehen sind. Mit dieser Maßnahme ist eine weitere Aufteilung bei der Ansteuerung der Schrittmotoren möglich. Die Schrittmotoren, die jeweils an den Steuerleitungen von zweiten Schaltmitteln oder Umschaltmitteln angeschlossen sind, bilden eine Gruppe.

Der gezielte Zugriff auf einen Schrittmotor oder auf eine ganze Schrittmotorengruppe vom Steuergerät aus ermöglicht die Verwendung von Diagnoseverfahren, die eine Überprüfung des Schrittmotors oder der Schrittmotorengruppe auf Funktionsfähigkeit ermöglichen.

Die erfindungsgemäße Vorrichtung ist insbesondere geeignet zur Verwendung in Kraftfahrzeugen. Bei dieser Verwendung macht sich die kostengünstige Realisierung der Vorrichtung insbesondere bei der Serienproduktion vorteilhaft bemerkbar. Eine bevorzugte Verwendung im Kraftfahrzeug ist der Einsatz in einer Klimaanlage, die in Abhängigkeit von der Ausbaustufe heute zehn oder noch mehr Schrittmotoren zum Betätigen von Luftklappen enthalten kann.

Eine Weiterbildung, die den Verkabelungsaufwand weiter reduziert, sieht vor, daß das Steuergerät in einem übergeordneten Steuergerät, beispielsweise einem Klimasteuergerät, enthalten ist.

Weitere vorteilhafte Weiterbildungen und Ausgestaltungen der erfindungsgemäßen Vorrichtung zum Betreiben von Schrittmotoren ergeben sich aus weiteren abhängigen Ansprüchen in Verbindung mit der folgenden Beschreibung.

### Zeichnung

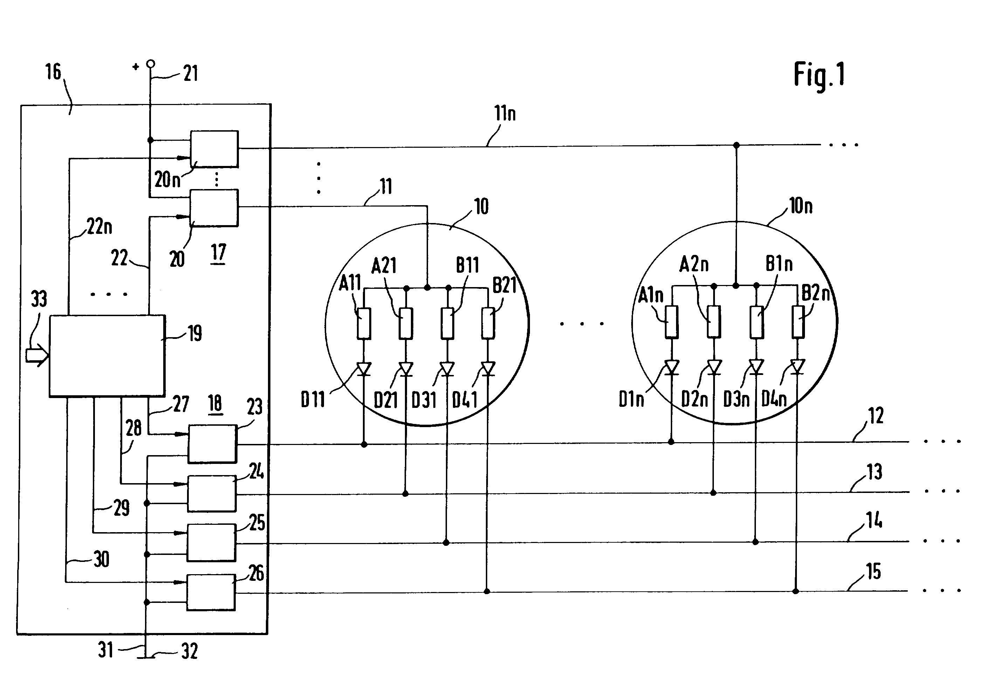

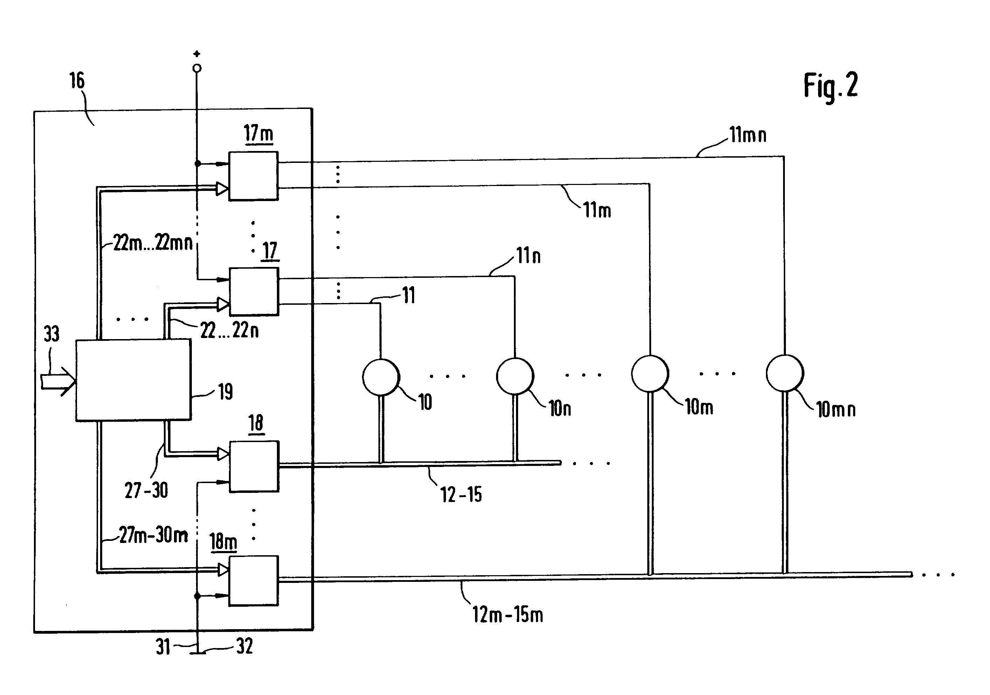

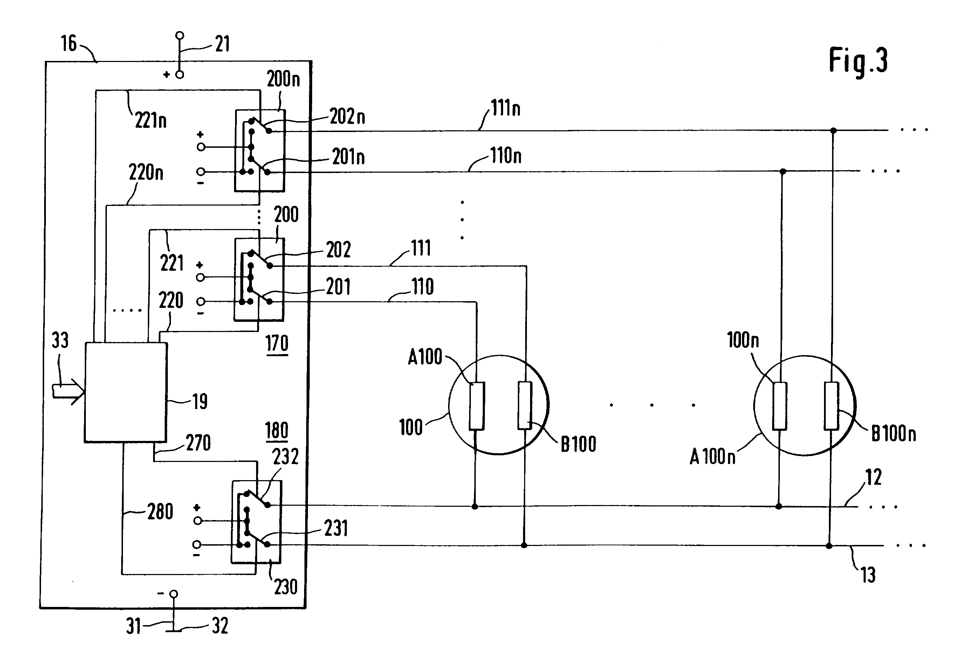

Figur 1 zeigt ein Blockschaltbild einer Ausführung einer Vorrichtung zum Betreiben von Schrittmotoren, Figur 2 zeigt eine Erweiterungsmöglichkeit zur ersten Ausführung und Figur 3 zeigt eine Ausführung der erfindungsgemäßen Vorrichtung zum Betreiben von Schrittmotoren.

In Figur 1 sind ein erster Schrittmotor 10 und ein n-ter Schrittmotor 10n gezeigt, die im Ausführungsbeispiel identisch aufgebaut sind. An einer zum ersten Schrittmotor 10 führenden ersten Stromversorgungsleitung 11 sind vier Teilwicklungen A11, A21, B11, B21 des ersten Schrittmotors 10 angeschlossen. An einer zum n-ten Schrittmotor 10n führenden n-ten Stromversorgungsleitung 11n sind ebenfalls vier Teilwicklungen Aln, A2n, B1n, B2n des n-ten Schrittmotors 10n angeschlossen. Die zwischen den Schrittmotoren 10 ... 10n eingetragenen Punkte bedeuten, daß eine beliebige Anzahl von weiteren Schrittmotoren vorgesehen sein kann. Ebenso bedeuten die zwischen den Stromversorgungsleitungen 11 ... 11n eingetragenen Punkte, daß eine beliebige Anzahl von weiteren Stromversorgungsleitungen vorgesehen sein kann, wobei die Anzahl der Stromversorgungsleitungen 11 ... 11n nicht notwendigerweise gleich der Anzahl der Schrittmotoren 10 ... 10n ist. Es kann der Fall auftreten, daß weniger Stromversorgungsleitungen 11 ... 11n als Schrittmotoren 10 ... 10n vorgesehen sind. Ein solcher Fall sieht vor, daß an einer der Stromversorgungsleitungen 11 ... 11n, im gezeigten Ausführungsbeispiel an der n-ten Stromversorgungsleitung 11n, außer dem n-ten Schrittmotor 10n weitere, in der Figur nicht gezeigte Schrittmotoren angeschlossen sind. Diese Schrittmotoren werden über eine einzige Stromversorgungsleitung 11n gleichzeitig mit Energie versorgt.

Die erste Teilwicklung A11 des ersten Schrittmotors 10 und die erste Teilwicklung A1n des n-ten Schrittmotors 10n sind an einer ersten Steuerleitung 12 angeschlossen. Die zweite Teilwicklung A21 des ersten Schrittmotors und die zweite Teilwicklung A2n des n-ten Schrittmotors sind an einer zweiten Steuerleitung 13 angeschlossen. Die dritte Teilwicklung B11 des ersten Schrittmotors 10 und die dritte Teilwicklung B1n des n-ten Schrittmotors 10n sind an einer dritten Steuerleitung 14 angeschlossen. Die vierte Teilwicklung B21 des ersten Schrittmotors 10 und die vierte Teilwicklung B2n des n-ten Schrittmotors 10n sind an einer vierten Steuerleitung 15 angeschlossen.

In den Verbindungsleitungen zwischen den Teilwicklungen A11, A21, B11, B21; A1n, A2n, B1n, B2n und den Steuerleitungen 12 - 15 sind jeweils Stromventile D11, D21, D31, D41; D1n, D2n, D3n, D4n angeordnet.

Sowohl die Stromversorgungsleitungen 11 ... 11n als auch die Steuerleitungen 12 - 15 sind zu einem Steuergerät 16 geführt, das erste Schaltmittel 17, zweite Schaltmittel 18 sowie eine signalverarbeitende Anordnung 19 enthält. Die ersten Schaltmittel 17 enthalten eine erste Endstufe 20, an welcher die erste Stromversorgungsleitung 11 angeschlossen ist, bis zu einer n-ten Endstufe 20n, an welcher die n-te Stromversorgungsleitung 11n angeschlossen ist. Die Endstufen 20 ... 20n der ersten Schaltmittel 17 sind jeweils an einer ersten Energieversorgungsleitung 21 angeschlossen, die im gezeigten Ausführungsbeispiel eine positive Polarität aufweist. Die signalverarbeitende Anordnung 19 gibt an die erste Endstufe 20 der ersten Schaltmittel 17 ein erstes Ansteuersignal 22 und an die n-te Endstufe 20n ein n-tes Ansteuersignal 22n ab.

Die zweiten Schaltmittel 18 enthalten ebenfalls eine Anzahl von Endstufen, deren Anzahl der Anzahl der Steuerleitungen 12 - 15 entspricht. Eine erste Endstufe 23 ist mit der ersten Steuerleitung 12, eine zweite Endstufe 24 mit der zweiten Steuerleitung 13, eine dritte Endstufe 25 mit der dritten Steuerleitung 14 und eine vierte Endstufe 26 mit der vierten Steuerleitung 15 verbunden. Die signalverarbeitende Anordnung 19 gibt an die Endstufen 23 - 26 der zweiten Schaltmittel 18 ebenfalls Ansteuersignale ab. Die erste Endstufe 23 erhält ein erstes Ansteuersignal 27, die zweite Endstufe 24 ein zweites Ansteuersignal 28, die dritte Endstufe 25 ein drittes Ansteuersignal 29 und die vierte Endstufe 26 ein viertes Ansteuersignal 30 zugeleitet. Die Endstufen 23 - 26 der zweiten Schaltmittel 18 sind jeweils an eine zweite Energieversorgungsleitung 31 angeschlossen, die im gezeigten Ausführungsbeispiel an eine Gerätemasse 32 geführt ist.

Die signalverarbeitende Anordnung 19 erhält über einen Datenbus 33 von weiteren, nicht gezeigten Anordnungen Signale zugeführt und kann über den Datenbus 33 Daten abgeben.

Figur 2 zeigt eine Erweiterungsmöglichkeit der in Figur 1 gezeigten Vorrichtung. Diejenigen Teile, die in beiden Figuren übereinstimmen, tragen jeweils dieselben Bezugszeichen. Die Erweiterung sieht im wesentlichen vor, daß mehrere zweite Schaltmittel 18 vorgesehen sind, die jeweils eine vorgegebene Anzahl, im gezeigten Ausführungsbeispiel jeweils vier Steuerleitungen, mit Signalen beaufschlagen. Die einzelnen zweiten Schaltmittel 18 sind in Figur 2 mit den Bezugszeichen 18 ... 18m bezeichnet. Die m-ten zweiten Schaltmittel 18m sind mit Steuerleitungen 12m - 15m verbunden. Die m-ten zweiten Schaltmittel 18m erhalten von der signalverarbeitenden Anordnung 19 Steuersignale 27m - 30m zugeführt. An den Steuerleitungen 12m - 15m sind weitere Schrittmotoren 10m ... 10mn angeschlossen. Die Schrittmotoren 10 ... 10n und die Schrittmotoren 10m ... 10mn bilden jeweils eine Schrittmotorengruppe, die an unterschiedlichen Steuerleitungen 12 - 15, 12m - 15m angeschlossen sind. Die Stromversorgungsleitungen 11m - 11mn der Schrittmotoren 10m .. 10mn sind separat zum Steuergerät 16 geführt. Für jede Stromversorgungsleitung 11m ... 11mn ist eine eigene Endstufe vorgesehen, die im Rahmen der ersten Schaltmittel 17 ... 17m enthalten sind. Die m-ten ersten Schaltmittel 17m erhalten von der signalverarbeitenden Anordnung 19 erzeugte Ansteuersignale 22m ... 22mn zugeführt. Bei dem in Figur 2 gezeigten Ausführungsbeispiel ist es ebenfalls möglich, an einer Stromversorgungsleitung 11m ... 11mn weitere, in der Figur nicht näher gezeigte Schrittmotoren anzuschließen, die jeweils gleichzeitig mit Energie versorgt werden.

Figur 3 zeigt eine Ausführung der erfindungsgemäßen Vorrichtung zum Betreiben von bipolaren Schrittmotoren. Diejenigen Teile, die in den Figuren 3 und 1 übereinstimmen, tragen jeweils dieselben Bezugszeichen. Gezeigt sind ein erster Schrittmotor 100 und ein n-ter Schrittmotor 100n, die im Ausführungsbeispiel identisch aufgebaut sind. Zum ersten Schrittmotor 100 führen eine erste und zweite Stromversorgungsleitung 110, 111. Die erste Stromversorgungsleitung 110 ist mit einer ersten Wicklung A100 und die zweite Stromversorgungsleitung 111 mit einer zweiten Wicklung B100 des ersten Schrittmotors 100 verbunden. Zum n-ten Schrittmotor 100n führen eine erste n-te Stromversorgungsleitung 110n und eine zweite n-te Stromversorgungsleitung 111n. Die erste n-te Stromversorgungsleitung 110n ist mit einer ersten Wicklung A100n und die zweite Stromversorgungsleitung 111n mit einer zweiten Wicklung B100n des n-ten Schrittmotors 100n verbunden.

Die zwischen den Schrittmotoren 100 ... 100n eingetragenen Punkte bedeuten, daß eine beliebige Anzahl von weiteren Schrittmotoren vorgesehen sein kann. Ebenso bedeuten die zwischen den Stromversorgungsleitungen 110, 111 ... 110n, 111n eingetragenen Punkte, daß eine beliebige Anzahl von weiteren Stromversorgungsleitungen vorgesehen sein kann, wobei die Anzahl der Stromversorgungsleitungen 110, 111 ... 110n, 111n nicht notwendigerweise gleich der doppelten Anzahl der Schrittmotoren 100 ... 100n ist. Es kann der Fall auftreten, daß weniger Stromversorgungsleitungen 110, 111 ... 110n, 111n als Schrittmotoren 100 ... 100n vorgesehen sind. Ein solcher Fall sieht vor, daß an Stromversorgungsleitungen 110, 111, 110n, 111n, im gezeigten Ausführungsbeispiel an den Stromversorgungsleitungen 110n, 111n weitere, in der Figur nicht gezeigte Schrittmotoren angeschlossen sind. Diese weiteren Schrittmotoren werden über die beiden Stromversorgungsleitungen 110n, 111n gleichzeitig mit Energie versorgt.

Die erste Wicklung A100 des ersten Schrittmotors 100 sowie die erste Wicklung A100n des n-ten Schrittmotors 100n sind an der ersten Steuerleitung 12 angeschlossen. Die zweite Wicklung B100 des ersten Schrittmotors 100 und die zweite Wicklung B100n des n-ten Schrittmotors 100n sind an der zweiten Steuerleitung 13 angeschlossen.

Sowohl die Stromversorgungsleitungen 110, 111 ... 110n, 111n als auch die Steuerleitungen 12, 13 sind zu dem Steuergerät 16 geführt, daß erste Umschaltmittel 170, zweite Umschaltmittel 180 sowie die signalverarbeitende Anordnung 19 enthält. Die ersten Umschaltmittel 170 enthalten eine erste Umschaltstufe 200, an welcher die erste und die zweite Stromversorgungsleitung 110, 111 angeschlossen sind, bis zu einer n-ten Umschaltstufe 200n, an welcher die erste n-te und zweite n-te Stromversorgungsleitungen 110n, 111n angeschlossen sind.

Die Umschaltstufen 200 ... 200n der ersten Umschaltmittel 170 sind jeweils sowohl an der ersten Energieversorgungsleitung 21 als auch an der zweiten Energieversorgungsleitung 31 angeschlossen. Die erste Energieversorgungsleitung 21 weist im gezeigten Ausführungsbeispiel eine positive Polarität und die zweite Energieversorgungsleitung 31 eine negative Polarität auf. Die signalverarbeitende Anordnung 19 gibt an die erste Umschaltstufe 200 ein erstes und zweites Umschaltsignal 220, 221 und an die n-te Umschaltstufe 200n ein erstes n-tes und ein zweites n-tes Umschaltsignal 220n, 221n ab.

Die zweiten Umschaltmittel 180 enthält eine weitere Umschaltstufe 230. Die weitere Umschaltstufe 230 ist mit den Steuerleitungen 12, 13 verbunden. Die signalverarbeitende Anordnung 19 gibt an die weitere Umschaltstufe 230 ein erstes weiteres Umschaltsignal 270 und ein zweites weiteres Umschaltsignal 280 ab. Die weitere Umschaltstufe 230 ist ebenfalls sowohl mit der ersten Energieversorgungsleitung 21 als auch mit der zweiten Energieversorgungsleitung 31 verbunden.

Die Umschaltstufen 200 ... 200n sowie die weitere Umschaltstufe 230 enthalten jeweils zwei Umschalter 201, 202 ... 201n, 202n, 231, 232, welche die jeweils angeschlossenen Stromversorgungsleitungen 110, 111 ... 110n, 111n sowie die Steuerleitungen 12, 13 entweder mit dem positiven oder mit dem negativen Potential verbinden.

Die Vorrichtung gemäß Figur 1 arbeitet folgendermaßen:

Das Steuergerät 16 kann über eine der Endstufen 20 ... 20n der ersten Schaltmittel 17 gezielt einen der Schrittmotoren 10 ... 10n oder weitere Schrittmotoren, die an einer einzigen Stromversorgungsleitung 11 ... 11n angeschlossen sind, mit Energie versorgen, welche die Endstufe 20 ... 20n von der ersten Energieversorgungsleitung 21 bezieht. Die Auswahl der betreffenden Endstufe 20 ... 20n erfolgt durch Abgabe eines der Steuersignale 22 ... 22n. Es kann auch der Fall vorgesehen sein, daß mehrere Schrittmotoren 10 ... 10n ausgewählt werden, auch solche, die nicht an der gleichen Stromversorgungsleitung 11 ... 11n angeschlossen sind. Die entsprechenden Endstufen 20 ... 20n werden von den zugehörigen Ansteuersignalen 22 ... 22n gleichzeitig angesteuert.

Die Schrittmotoren 10 ... 10n führen eine Bewegung aus, die von den auf den Steuerleitungen 12 - 15 liegenden Signalen vorgegebenen werden. Die auf der ersten bis vierten Steuerleitung 12 - 15 auszugebenden Steuersignale werden von den Endstufen 23 - 26 der zweiten Schaltmittel 18 bereitgestellt. Die Endstufen 23 - 26 der zweiten Schaltmittel 18 werden von den entsprechenden Ansteuersignalen 27 - 30 angesteuert, welche die signalverarbeitende Anordnung 19 bereitstellt. Die Endstufen 23 - 26 der zweiten Schaltmittel 18 verbinden im einfachsten Fall die einzelnen Steuerleitungen 12 - 15 über die zweite Energieversorgungsleitung 31 mit der Gerätemasse 32. Ein geschlossener Stromkreis führt über eine oder mehrere der Endstufen 20 ... 20n der ersten Schaltmittel 17, über wenigstens eine Teilwicklung A11, A21, B11, B21, A1n, A2n, B1n, B2n wenigstens eines Schrittmotors 10 ... 10n und über eine oder mehrere Endstufen 23 - 26 der zweiten Schaltmittel 18 zur zweiten Energieversorgungsleitung 31.

Ohne die in Figur 1 eingetragenen Stromventile D11, D21, D31, D41; D1n, D2n, D3n, D4n könnten parasitäre Stromkreise auftreten. Ein solcher parasitärer Stromkreis könnte sich beispielsweise ausbilden, wenn die Stromversorgungsleitung 11 für den Schrittmotor 10 aktiviert, die Stromversorgungsleitung 11n für den n-ten Schrittmotor 10n jedoch abgeschaltet bleibt. Ein parasitärer Strom könnte dann von der Stromversorgungsleitung 11 über die zweite Teilwicklung A21 des Schrittmotors 10, über die Steuerleitung 13 und über die ersten beiden Teilwicklungen A2n, A1n des n-ten Schrittmotors 10n zur Steuerleitung 12 fließen. Ein anderer parasitärer Strom könnte von der Stromversorgungsleitung 11 über die dritte Teilwicklung B11 des Schrittmotors 10, über die Steuerleitung 14 und über die dritte und erste Teilwicklung B1n, A1n des n-ten Schrittmotors 10n zur Steuerleitung 12 fließen. Ferner könnte ein parasitärer Strom von der Stromversorgungsleitung 11 über die vierte Teilwicklung B21 des Schrittmotors 10, über die Steuerleitung 15 und über die vierte und erste Teilwicklung B2n, A1n des n-ten Schrittmotors 10n zur Steuerleitung 12 fließen. Diese parasitären Ströme könnten die Funktionen der Schrittmotoren 10 ... 10n stören und beispielsweise unbeabsichtigt Bewegungen veranlassen. Die vorgesehenen Stromventile D11, D21, D31, D41 im Schrittmotor 10 und D1n, D2n, D3n, D4n im n-ten Schrittmotor 10n, jeweils vorzugsweise Dioden, verhindern zuverlässig derartige parasitäre Ströme. Die Stromventile D11, D21, D31, D41; D1n, D2n, D3n, D4n können jeweils an geeigneter Stelle in den Schrittmotoren 10 ... 10n in den Stromkreisen der Teilwicklungen A11, A21, B11, B21; A1n, A2n, B1n, B2n angeordnet sein. Diese Maßnahme bedingt eine Modifizierung der handelsüblich erhältlichen Schrittmotoren 10 ... 10n. In einer praktischen Realisierung der Vorrichtung kann davon ausgegangen werden, daß die Schrittmotoren 10 ... 10n jeweils über Steckverbindungen mit den Steuerleitungen 12 - 15 zu verbinden sind. Eine besonders vorteilhafte Ausgestaltung sieht deshalb vor, daß die Stromventile D11, D21, D31, D41; D1n, D2n, D3n, D4n in den Steckverbindungen untergebracht sind. Eine Modifizierung der handelsüblichen Schrittmotoren 10 ... 10n kann damit entfallen.

Die Vorrichtung gemäß Figur 2 arbeitet folgendermaßen:

Gegenüber der in Figur 1 gezeigten Vorrichtung ermöglicht das in Figur 2 gezeigte Ausführungsbeispiel der erfindungsgemäßen Vorrichtung eine Ansteuerung von getrennten Schrittmotorgruppen. Die Schrittmotoren 10 ... 10n sind in einer ersten und die Schrittmotoren 10m ... 10mn in einer anderen Gruppe zusammengefaßt. Der Anzahl der Gruppen entspricht die Anzahl der zweiten Schaltmittel 18 ... 18m. Entsprechend der Anzahl der Schrittmotorengruppen sind auch die ersten Schaltmittel 17 ... 17m vorhanden. Der wesentliche Vorteil der in Figur 2 gezeigten Weiterbildung liegt darin, daß die getrennt ansteuerbaren Schrittmotorgruppen eine größere Flexibilität in der Ansteuerung ermöglichen. Es gelten für alle in Gruppen zusammengefaßten Schrittmotoren 10 ... 10n, 10m ... 10mn die gleichen Eigenschaften wie für die anhand von Figur 1 einzeln beschriebene Gruppe.

Die erfindungsgemäße Vorrichtung gemäß Figur 3 arbeitet folgendermaßen:

Der wesentliche Unterschied der Vorrichtung gemäß Figur 3 zu der in Figur 1 gezeigten Vorrichtung liegt im Einsatz von unterschiedlichen Schrittmotoren. Während in Figur 1 unipolare Schrittmotoren zugrundegelegt wurden, kommen in Figur 3 bipolare Schrittmotoren 100 ... 100n zum Einsatz. Bipolare Schrittmotoren 100 ... 100n ermöglichen die Bestromung der einzelnen Wicklungen A100, B100; A100n, B100n in beide Stromrichtungen. Demzufolge sind die in Figur 1 gezeigten Schaltmittel 17 durch die Umschaltmittel 170 und die zweiten Schaltmittel 18 durch die zweiten Umschaltmittel 180 zu ersetzen. Anstelle der in Figur 1 gezeigten Endstufen 20 ... 20n, 23 - 26, die lediglich eine Ein-Aus-Funktion aufzuweisen brauchen, enthalten die ersten und zweiten Umschaltmittel 170, 180 jeweils wenigstens zwei Umschalter 201, 202 ... 201n, 202n; 231, 232. Mit dieser Maßnahme ist es möglich, jede einzelne Stromversorgungsleitung 110, 111 ... 110n, 111n sowie jede Steuerleitung 12, 13 entweder mit der ersten Energieversorgungsleitung 21, die das positive Potential aufweist, oder mit der zweiten Energieversorgungsleitung 31, die das negative Potential aufweist, zu verbinden. Ein Stillsetzen des entsprechenden Schrittmotors 100 ... 100n wird dadurch möglich, daß die im Schrittmotor 100 ... 100n jeweils enthaltenen Wicklungen A100, B100; A100n, B100n stromlos gehalten werden. Dies wird beispielsweise dadurch erreicht, daß beide Wicklungsanschlüsse entweder mit dem positiven oder mit dem negativen Potential gleichzeitig beaufschlagt werden, so daß kein resultierender Strom fließen kann. Eine andere Möglichkeit ist darin zu sehen, daß wenigstens ein mit einem Wicklungsende verbundener Umschalter 201, 202 ... 201n, 202n; 231, 232 einen hochohmigen Betriebszustand einnehmen kann, bei dem die angeschlossene Stromversorgungsleitung 110, 111 ... 110n, 111n oder eine angeschlossene Steuerleitung 12, 13 weder mit dem negativen noch mit dem positiven Potential verbunden ist. Die signalverarbeitende Anordnung 19 stellt anstelle der in Figur 1 gezeigten Ansteuersignale 22 ... 22n die Umschaltsignale 220, 221 ... 220n, 221n sowie die weiteren Umschaltsignale 270, 280 bereit. Gemeinsam mit der in Figur 1 gezeigten Ausführung der erfindungsgemäßen Vorrichtung ist der Anschluß der Schrittmotoren 100 ... 100n an jeweils dieselben Steuerleitungen 12, 13.

Entsprechend der in Figur 2 gezeigten Erweiterungsmöglichkeit der in Figur 1 gezeigten Vorrichtung ist eine Erweiterung der in Figur 3 gezeigten Vorrichtung möglich. Die Schrittmotoren 100 ... 100n sind dann Schrittmotoren, die zu einer Gruppe zusammengefaßt sind. Gegebenenfalls sind mehrere solcher Schrittmotorengruppen vorgesehen, die jeweils an weitere Steuerleitungen anzuschließen sind. Entsprechend der Anzahl der Gruppen von Schrittmotoren sind die zweiten Umschaltmittel 180 zu erweitern. Für jede Gruppe ist eine zusätzliche weitere Umschaltstufe 230 erforderlich. Die Schrittmotoren der unterschiedlichen Gruppen können entweder an dieselben Stromversorgungsleitungen 110, 111 ... 110n, 111n oder an weitere zusätzliche, in Figur 3 nicht gezeigte Stromversorgungsleitungen angeschlossen sein. In diesem Fall sind die ersten Umschaltmittel 170 ebenfalls zu ergänzen. Gegebenenfalls sind weitere Umschaltstufen 200 ... 200n vorzusehen.

Zum Einsatz bei der in Figur 1 gezeigten Ausführung der Vorrichtung sind als Schrittmotoren 10 ... 10n, 10m ... 10mn insbesondere zweisträngige Schrittmotoren geeignet, die jeweils zwei Teilwicklungen aufweisen. Die erste Teilwicklung A11, A1n und die zweite Teilwicklung A21, A2n bilden eine erste Wicklung des Schrittmotors 10 ... 10n, 10m ... 10mn, während die dritte Teilwicklung B11, B1n und die vierte Teilwicklung B21, B2n des Schrittmotors 10 ... 10n, 10m ... 10mn die zweite Wicklung bilden.

Es wurde bereits darauf hingewiesen, daß die Schrittmotoren 10 ... 10n, 10m ... 10mn nicht identisch aufgebaut sein müssen. Beispielsweise ist es möglich, daß einer der Schrittmotoren 10 ... 10n, 10m ... 10mn weniger als vier Teilwicklungen A11, A21, B11, B21; A1n, A2n, B1n, B2n aufweist.

Festzuhalten ist lediglich, daß die Anzahl der Steuerleitungen 12 - 15, 12m - 15m maximal der Anzahl der in einem Schrittmotor 10 ... 10n, 10m ... 10mn enthaltenen maximalen Anzahl von separat anzusteuernden Wicklungen oder Teilwicklungen entspricht. Eine untere Grenze für die Anzahl separater Wicklungen liegt bei zwei Wicklungen.

Zum Einsatz bei der in Figur 3 gezeigten Ausführung der erfindungsgemäßen Vorrichtung sind bipolare Schrittmotoren vorgesehen, die lediglich die in Figur 3 gezeigten zwei Wicklungen A100, B100; A100n, B100n zu enthalten brauchen. Gegebenenfalls sind jeweils weitere Wicklungen in den Schrittmotoren 100 ... 100n enthalten. Entsprechend enthalten die Umschaltstufen 200 ... 200n sowie die weitere Umschaltstufe 230 zusätzliche Umschalter 201, 202 ... 201n, 202n; 231, 232.

Die signalverarbeitende Anordnung legt die Ansteuersignale 22 ... 22n, 22m ... 22mn, 27m - 30m, 27 - 30 sowie die Umschaltsignale 220, 221 ... 220n, 221n und die weiteren Umschaltsignale 270, 280 in Abhängigkeit von einer Information fest, die über den Datenbus 33 zur signalverarbeitenden Anordnung 19 gelangt. Im einfachsten Fall ist der Datenbus 33 eine einzige Leitung, die zu einem Eingabeelement führt. Das Eingabeelement kann beispielsweise ein Solltemperaturgeber für eine Klimaanlage sein, die beispielsweise in einem Kraftfahrzeug eingebaut ist. Die Schrittmotoren 10 ... 10n, 10m ... 10mn; 100 ... 100n betätigen Klappen in Lüftungskanälen, um eine vorgegebene Lüftung und/oder Temperatur im Innenraum des Kraftfahrzeugs bereitzustellen. In einem anderen Ausführungsbeispiel werden über den Datenbus 33 bereits in einem anderen, in den Figuren nicht gezeigten Steuergerät vorverarbeitete Daten übertragen, wobei die signalverarbeitende Anordnung 19 lediglich noch die für die Schrittmotoren 10 ... 10n, 10m ... 10mn; 100 ... 100n erforderlichen Ansteuersignale 22 ... 22n, 22m ... 22mn, 27 - 30, 27m - 30m oder Umschaltsignale 220, 221 ... 220n, 221n; 270, 280 erzeugen muß.

Vorzugsweise ist das Steuergerät 16 in einem größeren Steuergerät, beispielsweise einem Klimaanlagensteuergerät eines Kraftfahrzeugs enthalten. Der Datenbus 33 kann bei diesem Ausführungsbeispiel mit besonders kurzen Leitungen, beispielsweise auf einer Platine, realisiert werden. Ferner ist es möglich, daß der Datenbus 33 vollständig entfällt, weil die signalverarbeitende Anordnung 19 ein vollständiges Mikrorechnersystem ist, das die gesamte Signalverarbeitung vornimmt, die das Steuergerät vorzunehmen hat. Das in den Figuren gezeigte Steuergerät 16 reduziert sich somit auf die ersten und zweiten Schaltmittel 17 ... 17m, 18 ... 18m oder Umschaltmittel 170, 180, die in Abhängigkeit von den zu schaltenden Strömen aber als separate Bauteile ebenfalls entfallen können. Sofern die signalverarbeitende Anordnung 19 entsprechende Ausgänge mit der erforderlichen Strombelastbarkeit zur Verfügung stellt, sind die ersten und zweiten Schaltmittel 17 ... 17m, 18 ... 18m oder Umschaltmittel 170, 180 als in der signalverarbeitenden Anordnung 19 integriert zu betrachten.

Der gezielte Zugriff auf einen Schrittmotor 10 ... 10n, 10m ... 10mn; 100 ... 100n oder zumindest auf mehrere, an einer Stromversorgungsleitung 11 ... 11n, 11m ... 11mn; 110, 111 ... 110n, 111n angeschlossenen Schrittmotoren ermöglicht dem Steuergerät die Durchführung einer Diagnose, die Aufschluß über das ordnungsgemäße Arbeiten des Schrittmotors 10 ... 10n, 10m ... 10mn; 100 ... 100n gibt. Insbesondere sind Kurzschlüsse erkennbar, die in den Endstufen 20 ... 20n der ersten Schaltmittel 17 ... 17m und/oder den Endstufen 23 - 26 der zweiten Schaltmittel 18 ... 18m oder in den Umschaltstufen 200 ... 200n; 230 einen außergewöhnlich hohen Strom fließen lassen oder zu einem erhöhten Spannungsabfall führen. Unterbrechungen werden ebenfalls erkannt. Die entsprechenden Leitungen von gegebenenfalls vorgesehenen Sensoren oder sonstigen Vorrichtungen zur Durchführung der Diagnose sind in den Figuren nicht näher gezeigt. Die Diagnose kann in der signalverarbeitenden Anordnung 19 durchgeführt werden, die bei einem festgestellten Fehler ein entsprechendes Warnsignal abgibt, das in geeigneter Form, beispielsweise einer Bedienperson zur Kenntnis gegeben wird.

Auf den Steuerleitungen 12 - 15, 12m - 15n können sowohl impulsbreitemodulierte als auch frequenzmodulierte Signale vorgegeben werden, die zum Ansteuern eines oder mehrerer Schrittmotoren 10 ... 10n, 10m ... 10mn; 100 ... 100n vorgesehen sind.

## Patentansprüche

1. Vorrichtung zum Betreiben von Schrittmotoren, mit einem Steuergerät, das Steuersignale für die Wicklungen der Schrittmotoren und Auswahlsignale zum Ansteuern wenigstens eines bestimmten Schrittmotors erzeugt, dadurch gekennzeichnet, daß die für die Wicklungen (A100, B100; A100n, B100n) eines Schrittmotors (100 ... 100n) vorgesehenen Stromversorgungsleitungen (110, 111 ... 110n, 111n) zum Steuergerät (16) geführt sind, daß das Steuergerät (16) erste Umschaltmittel (170) für jede Stromversorgungsleitung (110, 111 ... 110n, 111n) zum Verbinden der Stromversorgungsleitungen (110, 111 ... 110n, 111n) mit einem positiven oder negativen Potential aufweist, daß wenigstens zwei Steuerleitungen (12, 13) vorgesehen sind, daß das Steuergerät (16) zweite Umschaltmittel (180) enthält zur Bereitstellung von vorgegebenen Steuersignalen auf den Steuerleitungen (12, 13), wobei die zweiten Umschaltmittel (180) die Steuerleitungen (12, 13) entweder mit dem positiven oder mit dem negativen Potential verbinden und daß an den Steuerleitungen (12, 13) die Wicklungen (A100, B100 ... A100n, B100n) der Schrittmotoren (100 ... 100n) angeschlossen sind.

2. Vorrichtung nach Anspruch 1, dadurch gekennzeichnet, daß die Schrittmotoren (100 ... 100n) wenigstens zwei Wicklungen (A100, B100; Al00n, B100n) aufweisen.

3. Vorrichtung nach Anspruch 1, dadurch gekennzeichnet, daß mehr als eine Gruppe (m) von Schrittmotoren (100 ... 100n) vorgesehen sind, die von mehreren zweiten Umschaltmitteln (180) jeweils separat über Steuerleitungen (12, 13) angesteuert werden.

4. Vorrichtung nach Anspruch 1, dadurch gekennzeichnet, daß an einer Stromversorgungsleitung (11 ... 11n, 11m ... 11mn; 110, 111 ... 110n, 111n) mehrere Schrittmotoren (10 ... 10n; 10m ... 10mn; 100 ... 100n) angeschlossen sind.

5. Vorrichtung nach Anspruch 1, dadurch gekennzeichnet, daß im Steuergerät (16) eine Diagnose der Schrittmotoren (10 ... 10n, 10m ... 10mn) vorgesehen ist.

6. Verwendung der Vorrichtung nach Anspruch 4 in einer Heizungs- oder Klimaanlage, die vorzugsweise in einem Kraftfahrzeug angeordnet ist.

7. Vorrichtung nach Anspruch 5, dadurch gekennzeichnet, daß das Steuergerät (16) im Heizungs- oder Klimasteuergerät enthalten ist.

## Claims

1. Device for operating stepper motors, having a controller which generates control signals for the windings of the stepper motors and selection signals for driving at least one specific stepper motor, characterized in that the power supply lines (110, 111 ... 110n, 111n) provided for the windings (A100, B100; A100n, B100n) of a stepper motor (100 ... 100n) are led to the controller (16), in that the controller (16) has first changeover means (170) for each power supply line (110, 111 ... 110n, llln) to connect the power supply lines (110, 111 ... 110n, llln) to a positive or negative potential, in that at least two control lines (12, 13) are provided, in that the controller (16) contains second changeover means (180) to provide predefined control signals on the control lines (12, 13), the second changeover means (180) connecting the control lines (12, 13) either to the positive or to the negative potential, and in that the windings (A100, B100 ... A100n, B100n) of the stepper motors (100 ... 100n) are connected to the control lines (12, 13).

2. Device according to Claim 1, characterized in that the stepper motors (100 ... 100n) have at least two windings (A100, B100; A100n, B100n).

3. Device according to Claim 1, characterized in that more than one group (m) of stepper motors (100 ... 100n) are provided, which are driven by a plurality of second changeover means (180), in each case separately via control lines (12, 13).

4. Device according to Claim 1, characterized in that a plurality of stepper motors (10 ... 10n; 10m ... 10mn; 100 ... 100n) are connected to a power supply line (11 ... 11n, 11m... 11mn; 110, 111 ... 110n, 111n).

5. Device according to Claim 1, characterized in that diagnostics for the stepper motors (10 ... 10n, 10m ... 10mn) are provided in the controller (16).

6. Use of the device according to Claim 4 in a heating or air-conditioning installation, which is preferably arranged in a motor vehicle.

7. Device according to Claim 5, characterized in that the controller (16) is contained in the heating or air-conditioning controller.

## Revendications

1. Dispositif pour faire fonctionner des moteurs pas à pas, avec un appareil de commande qui produit des signaux de commande pour les enroulements des moteurs pas à pas et des signaux sélectionnés qui servent à commander au moins un moteur pas à pas déterminé,
caractérisé en ce que
- les lignes d'alimentation de courant (110, 111 ... 110n, 111n) qui sont prévues pour les enroulements (A100, B100 ; A100n, B100n) d'un moteur pas à pas (100 ... 100n), sont amenées à l'appareil de commande (16),
- l'appareil de commande (16) présente des premiers moyens de commutation (170) pour chaque ligne d'alimentation de courant (110, 111 ... 110n, 111n) qui sert à relier les lignes d'alimentation de courant (110, 111 ... 110n, 111n) avec un potentiel positif ou un potentiel négatif,
- l'on prévoit au moins deux lignes de commande (12, 13),
- l'appareil de commande (16) contient deux moyens de commutation (180) pour fournir des signaux de commande prédéfinis aux lignes de commande (12, 13), les seconds moyens de commutation (180) reliant les lignes de commande (12, 13) soit au potentiel positif, soit au potentiel négatif et en ce que les enroulements (A100, B100 ... A100n, B100n) des moteurs pas à pas (100 ... 100n) sont raccordés aux lignes de commande (12, 13).

2. Dispositif selon la revendication 1,
caractérisé en ce que
les moteurs pas à pas (100 ... 100n) présentent au moins deux enroulements (A100, B100 ; A100n, B100n).

3. Dispositif selon la revendication 1,
caractérisé en ce que
l'on prévoit plus d'un groupe (m) de moteurs pas à pas (100 ... 100n) qui sont commandés par plusieurs seconds moyens de commutation (180) de façon respectivement séparée au moyen des lignes de commande (12, 13).

4. Dispositif selon la revendication 1,
caractérisé en ce que
plusieurs moteurs pas à pas (10 ... 10n ; 10m ... 10mn ; 100 ... 100n) sont raccordés à une ligne d'alimentation de courant (11 ... 11n, 11m ..., 11mn ; 110, 111 ... 110n, 111n).

5. Dispositif selon la revendication 1,
caractérisé en ce que
l'on prévoit dans l'appareil de commande (16) d'effectuer un diagnostic des moteurs pas à pas (10 ... 10n, 10m ... 10mn).

6. Utilisation du dispositif selon la revendication 4 dans une installation de chauffage ou de climatisation qui est disposée de préférence dans un véhicule à moteur.

7. Dispositif selon la revendication 5,
caractérisé en ce que
l'appareil de commande (16) est contenu dans l'appareil de chauffage ou de climatisation.
